# EUROPEAN PATENT APPLICATION

(11) **EP 3 109 150 A1**
(43) Date of publication of application: **28.12.2016**
(21) Application number: 15173649.3
(22) Date of filing: 24.06.2015
(51) Int. Cl.: B63B 59/02, E02B 17/00, E02B 3/26

(54) **A FENDER AND A VESSEL COMPRISING A FENDER**

(71) Applicant: BV Scheepswerf Damen Gorinchem, 4200 AA Gorinchem (NL)
(72) Inventor: MEWIS, Bastiaan Hendrikes, 4285 WG Woudrichem (NL); VAN OOSTEN, Cornelis Anton, 6673 AE Andelst (NL)
(74) Representative: De Vries & Metman

(57) **Abstract**

A fender (6) for a vessel (1) for positioning the vessel (1) against a stationary or floating object (2) comprises a resilient front wall (7) having a shock-absorber side (9) for contacting a stationary or floating object (2), a rear wall (8) having a fastening side (10) to be fastened to a vessel (1), an upper side (11), a lower side (12) and a deformation portion (15, 18) disposed between the front wall (7), the rear wall (8), the upper side (11) and the lower side (12). The deformation portion comprises a plurality of resilient connection elements (15) which are fixed to the front wall (7) in respective front wall junctions (16) spaced from each other in a direction parallel to the front wall (7) and the upper side (11), on the one hand, and to the rear wall (8) in respective rear wall junctions (17) spaced from each other in a direction parallel to the rear wall (7) and the upper side (11), on the other hand. Each of the connection elements (15) has a length between the front wall (7) and the rear wall (8) which exceeds the shortest distance between the front wall (7) and the rear wall (8) at its corresponding front wall junction (16) or rear wall junction (17), as measured in a direction from the shock-absorber side (9) to the fastening side (10). The number of front wall junctions (16) as well as the number of rear wall junctions (17) is less than ten per meter, preferably less than seven per meter.

## Description

The present invention relates to a fender for a vessel for positioning the vessel against a stationary or floating object, comprising a resilient front wall having a shock-absorber side for contacting a stationary or floating object, a rear wall having a fastening side to be fastened to a vessel, an upper side, a lower side and a deformation portion disposed between the front wall, the rear wall, the upper side and the lower side.

A fender for absorbing impacts during berthing of a vessel at a stationary or floating object is known in the prior art, for example a foam fender including a closed-cell polyethylene foam core and an outer skin of reinforced polyurethane elastomer. The known fender is attached to a vessel and keeps the vessel in place against a stationary or floating object by means of friction. During a period of contact between the fender of the vessel and the stationary or floating object, the vessel is propelled forwardly such that the fender more or less adheres to the stationary object. This means that the fender remains at about the same location with respect to the stationary object, whereas the stern of the vessel may move up and down due to waves. Consequently, the fender does not only absorb energy from the horizontal impact during berthing, but also vertical shear forces during the period of contact with the stationary object. A disadvantage of the known fender is that it wears very quickly due to heavy loads during use.

An object of the invention is to provide a fender with increased lifetime.

This object is accomplished with the fender according to the invention, which is characterized in that the deformation portion comprises a plurality of resilient connection elements which are fixed to the front wall in respective front wall junctions spaced from each other in a direction parallel to the front wall and the upper side, on the one hand, and to the rear wall in respective rear wall junctions spaced from each other in a direction parallel to the rear wall and the upper side, on the other hand, each of said connection elements having a length between the front wall and the rear wall which exceeds the shortest distance between the front wall and the rear wall at its corresponding front wall junction or rear wall junction, as measured in a direction from the shock-absorber side to the fastening side, wherein the number of front wall junctions as well as the number of rear wall junctions is less than ten per meter, preferably less than seven per meter.

An impact force of a stationary or floating object onto the fender according to the invention causes bending of the connection members. This provides an appropriate and predictable profile of impact energy absorption. The space between neighbouring connection elements may be void. Since the number of front wall junctions and rear wall junctions per meter is limited, i.e. the number of connection elements per meter in longitudinal direction of the fender is limited, an advantageous impact performance of the fender is reached when a ship including the fender is positioned against an object having a contact surface which is much smaller than the length of the fender. This may happen, for example, when the object has one or more posts against which the ship should be held. It is noted that the distance between front wall junctions as well as between rear wall junctions may vary. If they are located equidistantly, the distance between neighbouring junctions is larger than 10 cm, but in practice the distance may be larger than 25 cm, for example.

The distance between the front wall and the rear wall may be 200-1000 mm in non-deformed condition, but the deformation portion may be decreased down to 40% of the initial distance under deformed condition.

In practice the fender may be substantially symmetrical.

The front wall junction and rear wall junction of at least one connection element may lie in a plane that extends perpendicularly to the shock-absorber side, whereas the connection element comprises a curved portion. In this case, the front wall junction and rear wall junction are aligned, but the length of the connection member is longer than the shortest distance between the front wall junction and the rear wall junction because of the curved portion. The curved portion may comprise a U curve, for example.

In an alternative embodiment the connection elements extend obliquely with respect to the shock-absorber side as viewed in a direction from the upper side to the lower side. More specifically, at least two connection elements may diverge or converge as seen from the shock-absorber side to the fastening side. In other words, as seen from above the deformation portion comprises a lattice of connection members which are inclined with respect to the shock-absorber side.

Two neighbouring connection elements may be attached to each other at an intermediate junction located between the front wall and the rear wall. This provides a spring behaviour of the fender which may be desired for certain applications of the fender. The intermediate junction may be a type of connection element, as well, which extends in a direction parallel to the shock-absorber side.

The intermediate junction may be located closer to the shock-absorber side than to the fastening side in order to optimize the impact characteristic.

The number of intermediate junctions may be more than one, but less than four.

In a preferred embodiment the connection elements comprise plate segments extending transversely with respect to the shock-absorber side and the upper side. The thickness of the plate segments and/or the front wall and/or the rear wall may be 10-50 mm. The plate segments may have the same thickness as the rear wall and/or the front wall. This provides a predictive spring characteristic. The thickness of the front wall may be 25-50 mm and the thickness of the rear wall may be 20-40 mm. The plate segments extend upwardly, which creates a high stiffness in vertical direction of the fender. Portions of the front wall at the front wall junctions are directly supported in vertical direction by the plate segments and portions of the front wall which extend between neighbouring front wall junctions are indirectly supported by neighbouring plate segments. The ratio between height and length of each of the plate segments may be 75-300%.

The front wall junctions and the rear wall junctions may be parallel to each other in case of plate segments. In this case the junctions extend transversely to the upper side of the fender.

The front wall and the rear wall may be parallel, as well.

The plate segments may intersect at the intermediate junction, whereas the intermediate junction may be parallel to the front wall junctions and the rear wall junctions.

The connection element at opposite sides of the intermediate junction may be staggered in order to create a more predictable and repeatable spring performance of the fender.

The fender may be made from a single piece, for example by means of moulding. Casted poly urea may be applied for the entire fender. The resilient material may be polyurethane, natural rubber or an elastomer. Numerous visco elastic materials are conceivable. The weigh-to-volume ratio of the fender may be 250-500 kg/m3.

The fender may have a length which is larger than three times its width and larger than three times its height. The width and height of the fender may be more or less equal.

The upper side and/or the lower side of the fender may be open such that the cavities between the connection members are open at the upper side and the lower side of the fender. It is also possible to close or partly close the upper side and/or the lower side, for example by means of a flexible plate or sheet. In order to create a safe walking path on top of the fender it is preferred to close the cavities between the connection members at least partly at the upper side of the fender. On the other hand an open upper side facilitates inspection of the fender, whereas an open lower side can easily discharge water.

In order to minimize stress concentrations in the fender it is advantageous to apply radii at the front wall junctions, rear wall junctions and intermediate junctions, for example radii of 20-50 mm at those junctions. In general, edges can be rounded by 20-50% of the thickness of the corresponding portion of the fender.

The invention is also related to a vessel comprising a fender as described hereinbefore.

The invention will hereafter be elucidated with reference to drawings showing embodiments of the invention by way of example.
Fig. 1 is a plan view of a vessel including an embodiment of a fender according to the invention.
Fig. 2 is a side view of the vessel as shown in Fig. 1.
Fig. 3 is a perspective view of an embodiment of a fender according to the invention.
Fig. 4 is a plan view of the embodiment as shown in Fig. 3.
Fig. 5 is a similar view as Fig. 4, but illustrating functional parts of the fender.
Figs. 6-8 are similar views as Figs. 3-5, but showing an alternative embodiment.
Figs. 9-15 are similar views as Fig. 5, but showing alternative embodiments.

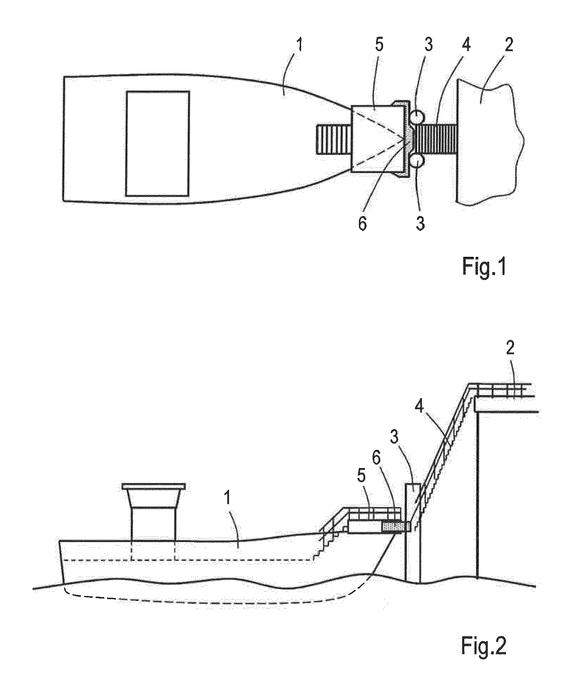

Fig. 1 shows a crew transfer vessel 1 which contacts an offshore stationary object 2, for example an offshore wind turbine. In practice, for transferring persons or materials between the vessel 1 and the stationary object 2 the vessel 1 is sailed to the object 2 and contacts two posts 3 of the object 2 between which a stairway 4 to a platform is located. The vessel 1 comprises a bridge 5 which provides a gateway between the vessel 1 and the stationary object 2.

The bow of the vessel 1 is provided with a fender 6, which keeps the vessel 1 in place against the stationary object 2. The fender 6 is an elastic member. During a period of contact between the vessel 1 and the stationary object 2, the vessel 1 is propelled forwardly such that the fender 6 in fact adheres to the posts 3. This means that under practical conditions the fender 6 remains at about the same location with respect to the posts 3, whereas the stern may move up and down due to waves. Consequently, the fender 6 does not only absorb energy from the horizontal impact during berthing, but it must also withstand vertical shear forces during the period of contact with the posts 3.

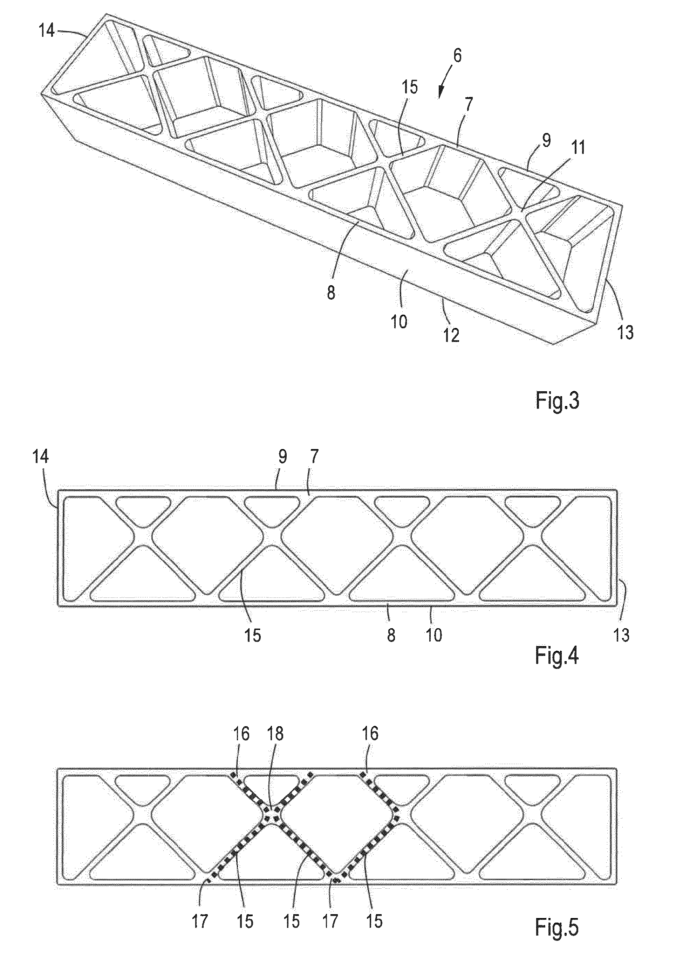

Figs. 3-5 show an embodiment of a fender 6 in more detail. The fender 6 comprises a front wall 7 and a rear wall 8. The front wall 7 has a shock-absorber side 9 for contacting the stationary object 2. The rear wall 8 has a fastening side 10 which can be fastened to the vessel 1. Furthermore, the fender 6 comprises an upper side 11, a lower side 12 and lateral sides 13, 14. The fender 6 has a block shape; the shock-absorber side 9, the fastening side 10, the upper and lower side 11, 12 have larger lengths than the lateral sides 13, 14 as seen from above. Hence, the longitudinal direction of the fender 6 extends parallel to the shock-absorber side 9, the fastening side 10, the upper side 11 and the lower side 12. It is noted that alternative shapes are conceivable.

The fender 6 is provided with a plurality of resilient connection elements 15 which form part of a lattice structure. In Fig. 5 three connection elements 15 are indicated by means of three broken lines. Each connection element 15 comprises a bent plate segment which is fixed to a front wall junction 16 and a rear wall junction 17 and which extends in vertical direction. This means that the length of each connection element 15 is larger than the shortest distance between the front wall 7 and the rear wall 8 at its corresponding front wall junction 16 or rear wall junction 17, as measured in a direction from the shock-absorber side 9 to the fastening side 10. In other words, when a virtual plane extending through the front wall junction 16 and perpendicular to the longitudinal direction of the fender 6 is considered, the shortest distance between the front wall 7 and the rear wall 8 is the length along the plane between the front wall 7 and the rear wall 8. The length measured along the bent plate segment 15 is larger than the mentioned shortest distance.

The connection elements 15 extend obliquely with respect to the fastening side 10 as viewed from above, i.e. as viewed in a direction from the upper side 11 to the lower side 12. In other words, the connection elements 15 are angled with respect to the front wall 7 at the respective front wall junctions 16, and the connection elements 15 are angled with respect to the rear wall 8 at the respective rear wall junctions 17. For example, the angle may be 30-60°, but alternative angles are conceivable.

In the embodiment as shown in Figs. 3-5 two neighbouring connection elements 15 are attached to each other at an intermediate junction 18 which is located between the front wall 7 and the rear wall 8. This embodiment has eight bent plate segments 15 and four intermediate junctions 18; a different number of plate segments 15 and intermediate junctions 18 are conceivable. The intermediate junctions 18 are located closer to the shock-absorber side 9 than the fastening side 10, which is advantageous in terms of impact characteristics.

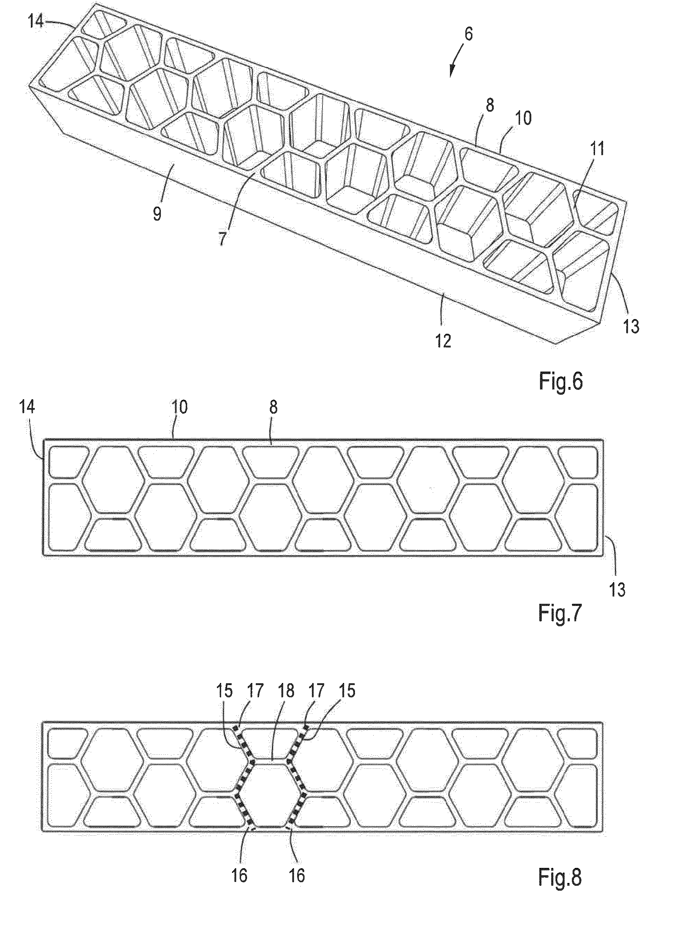

Figs. 6-8 show an alternative embodiment of the fender 6. Elements in these figures corresponding to the embodiment as shown in Figs. 3-5 are indicated by the same reference numbers. Broken lines in Fig. 8 illustrate two neighbouring connection elements 15 which are interconnected by the intermediate junction 18. In this embodiment the intermediate junction 18 comprises a plate segment extending in longitudinal direction of the fender 6, parallel to the fastening side 10 and the shock-absorber side 9. The connection elements 15 and the intermediate junctions 18 together form a honeycomb structure as viewed in a direction from the upper side 11 to the lower side 12.

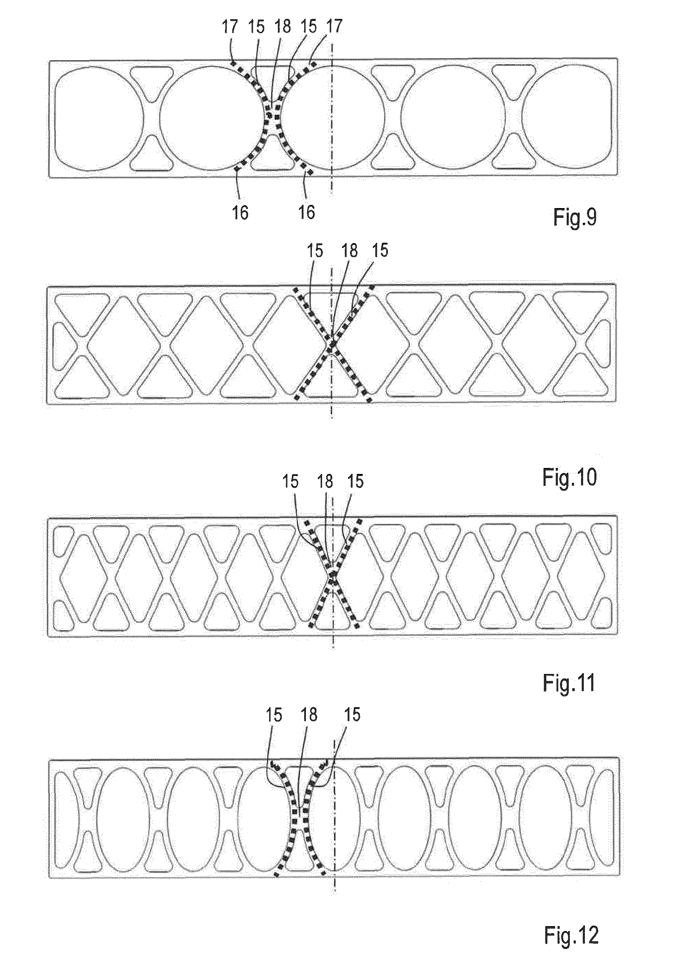

Figs. 9-15 show alternative embodiments of the fender 6. The plate segments 15 in the embodiments according to Figs. 9 and 12 are partly circular and oval shaped, respectively.

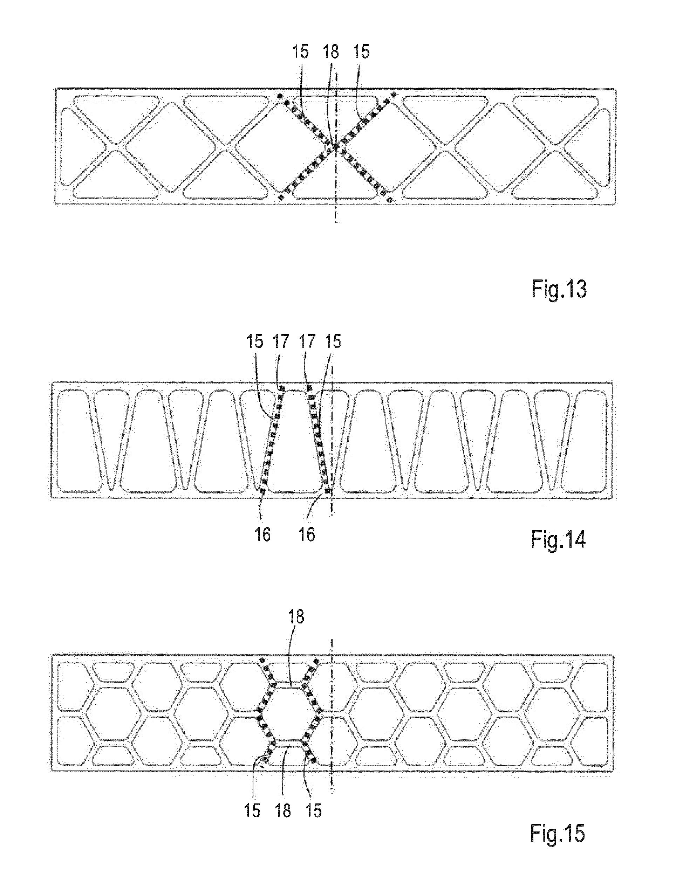

In the embodiment of Fig. 15 two neighbouring connection elements 15 in longitudinal direction of the fender 6 are interconnected by two intermediate junctions 18. As a result three cavities arise between the neighbouring connection elements 15.

In the embodiment of Fig. 14 two neighbouring connection elements 15 in longitudinal direction of the fender 6 are not interconnected by an intermediate junction. As seen in a direction from the shock-absorber side 9 to the fastening side 10 two neighbouring flat plate segments 15 diverge or converge.

The front wall 7, the rear wall 8 and the lateral sides 13, 14 comprise walls which extend between the upper side 11 and the lower side 12 of the fender 6. The connection elements 15 extend obliquely with respect to the fastening side 10 as viewed in a direction from the upper side 11 to the lower side 12. The lower and upper sides 11, 12 may remain open or may be covered by flexible sheets or the like.

The lengths of the fenders 6 as shown in the Figs. 3-15 is about 3m. The number of front wall junctions 16 as well as of rear wall junctions 17 in Figs. 3-5 is eight, such that the number amounts about 2.5 per meter. This is the same for the embodiment as shown Figs. 6-8. In the embodiment as shown in Fig. 11 the number is about 6.5 per meter.

The invention is not limited to the embodiments shown in the drawings and described hereinbefore, which may be varied in different manners within the scope of the claims and their technical equivalents.

## Claims

1. A fender (6) for a vessel (1) for positioning the vessel (1) against a stationary or floating object (2), comprising a resilient front wall (7) having a shock-absorber side (9) for contacting a stationary or floating object (2), a rear wall (8) having a fastening side (10) to be fastened to a vessel (1), an upper side (11), a lower side (12) and a deformation portion (15, 18) disposed between the front wall (7), the rear wall (8), the upper side (11) and the lower side (12), **characterized in that** the deformation portion comprises a plurality of resilient connection elements (15) which are fixed to the front wall (7) in respective front wall junctions (16) spaced from each other in a direction parallel to the front wall (7) and the upper side (11), on the one hand, and to the rear wall (8) in respective rear wall junctions (17) spaced from each other in a direction parallel to the rear wall (7) and the upper side (11), on the other hand, each of said connection elements (15) having a length between the front wall (7) and the rear wall (8) which exceeds the shortest distance between the front wall (7) and the rear wall (8) at its corresponding front wall junction (16) or rear wall junction (17), as measured in a direction from the shock-absorber side (9) to the fastening side (10), wherein the number of front wall junctions (16) as well as the number of rear wall junctions (17) is less than ten per meter, preferably less than seven per meter.

2. A fender (6) according to claim 1, wherein the front wall junction (16) and rear wall junction (17) of at least one connection element (15) lie in a plane that extends perpendicularly to the shock-absorber side (9), and the connection element (15) comprises a curved portion.

3. A fender (6) according to claim 1, wherein the connection elements (15) extend obliquely with respect to the shock-absorber side (9) as viewed in a direction from the upper side (11) to the lower side (12).

4. A fender (6) according to claim 3, wherein at least two connection elements (15) diverge or converge as seen from the shock-absorber side (9) to the fastening side (10).

5. A fender (6) according to one of the preceding claims, wherein two neighbouring connection elements (15) are attached to each other at an intermediate junction (18) located between the front wall (7) and the rear wall (8).

6. A fender (6) according to claim 5, wherein the intermediate junction (18) is located closer to the shock-absorber side (9) than to the fastening side (10).

7. A fender (6) according to claim 5 or 6, wherein the number of intermediate junctions (18) is more than one, but less than four.

8. A fender (6) according to one of the preceding claims, wherein the connection elements (15) comprise plate segments extending transversely with respect to the shock-absorber side (9) and the upper side (11).

9. A fender (6) according to claim 8, wherein the front wall junctions (16) and the rear wall junctions (17) are parallel to each other.

10. A fender (6) according to claim 5 and 9, wherein the plate segments intersect at the intermediate junction (18), and the intermediate junction (18) is parallel to the front wall junctions (16) and the rear wall junctions (17).

11. A fender (6) according to claim 5, wherein the connection element (15) at opposite sides of the intermediate junction (18) is staggered.

12. A fender (6) according to one of the preceding claims, wherein the connection elements (15) and/or the front wall (7) and/or the rear wall (8) are made from a resilient material that allows more than 50% stretch or more than 100% stretch, and may be made of a homogenous elastomer.

13. A fender (6) according to one of the preceding claims, wherein the connection elements (15) and/or the front wall (7) and/or the rear wall (8) comprise respective strengthening weaves.

14. A fender (6) according to one of the preceding claims, wherein the fender is made from a single piece.

15. A vessel (1) comprising a fender (6) according to one of the preceding claims.
